# EUROPÄISCHE PATENTANMELDUNG

(11) **EP 4 530 495 A1**
(43) Veröffentlichungstag der Anmeldung: **02.04.2025**
(21) Anmeldenummer: 23200014.1
(22) Anmeldetag: 27.09.2023
(51) Int. Cl.: F16H 1/46, F16H 57/08, F16H 57/00, F16H 57/02

(54) **ABSTÜTZELEMENT FÜR GETRIEBEKOMPONENTEN**

(71) Anmelder: Flender GmbH, 46395 Bocholt (DE)
(72) Erfinder: HAMBRECHT, Ralf, 46395 Bocholt (DE)
(74) Vertreter: Michalski Hüttermann & Partner Patentanwälte mbB

(57) **Zusammenfassung**

Planetengetriebe 10 für eine über einen Rotor 106 angetriebene Windkraftanlage 106, mit zumindest einer in einem Getriebegehäuse 12 um eine Drehachse A_{D} umlaufenden ersten und zweiten Planetenstufe 14₁, 14₂, wobei die beiden Planetenstufen 14₁, 14₂ zwischen einem Sonnenrad 22₁ der ersten Planetenstufe 14₁ und einem Planetenträger 16₂ der zweiten Planetenstufe 14₂ antriebsmäßig verbunden sind. Das Sonnenrad 22₁ der ersten Planetenstufe 14₁ ist mit dem Planetenträger 16₁ der ersten Planetenstufe 14₁ über ein lösbares Abstützelement 30 bedarfsweise verbunden. Durch das Abstützelement 30, das das Sonnenrad 22₁ der ersten Planetenstufe 14₁ mit dem Planetenträger 16₁ der ersten Planetenstufe 14₁ verbindet, kann in einer Transportsituation und vor einer endgültigen Montage oder Demontage an eine Rotorwelle 118 der Planetenträger 16₁ der ersten Planetenstufe 14₁ zur Abstützung und Zentrierung seinen eigenen Sonnenrades 22₁ genutzt werden.

## Beschreibung

Die Erfindung betrifft ein Planetengetriebe für eine über einen Rotor angetriebene Windkraftanlage, mit zumindest einer in einem Getriebegehäuse um eine Drehachse A_{D} umlaufenden ersten und zweiten Planetenstufe, wobei die beiden Planetenstufen zwischen einem Sonnenrad der ersten Planetenstufe und einem Planetenträger der zweiten Planetenstufe antriebsmäßig verbunden sind.

In der Windanlagenindustrie kommen aufgrund eines zunehmenden Kostendruckes und der geforderten Erhöhung der Drehmomentdichte vermehrt integrierte Triebstrangsysteme zum Einsatz. Bei einem möglichen Aufbau einer integrierten Triebstranglagerung wird das Getriebegehäuse des Planetengetriebes starr an ein Gehäuse der Hauptlagereinheit angebunden, wobei in der Hauptlagereinheit die Rotorwelle über eine Lagerung gegenüber dem Gehäuse drehbar gehalten wird. Der Planetenträger der ersten Planetenstufe ist einerseits mit der Rotorwelle antriebsmäßig verbunden und andererseits nicht eigenständig in dem Getriebegehäuse gelagert. Der Planetenträger der ersten Planetenstufe ist somit mittelbar über die Rotorwelle in der Hauptlagereinheit gelagert. Dies bedeutet, dass in einem Zustand, in dem das Planetengetriebe nicht an die Hauptlagereinheit montiert ist, der Planetenträger der ersten Planetenstufe keinen Halt durch eine Lagerung erfährt und sich schwerkraftbedingt in einer außermittigen Position befindet.

Somit ist es für Montage-, Demontage- und Transportzwecke erforderlich, dass der Planetenträger der ersten Planetenstufe in einer geeigneten Position fixiert und zumindest grob zentriert wird, so dass keine Kontaktkräfte und Massenbeschleunigungskräfte auf die Verzahnungen einwirken. Würden Kontaktkräfte und Massenbeschleunigungskräfte wirken, könnten die ineinandergreifenden Zähne der ersten Planetenstufe durch Stöße oder Schwingungen aufeinanderprallen und Schaden nehmen oder durch Reibkorrosion vorgeschädigt werden.

Bisher wurde der Planetenträger gegenüber dem Hohlrad - jeweils der ersten Planetenstufe - über am Außenumfang verteilte Gewindebohrungen in den Anschlussflanschen des Getriebegehäuses rotorseitig und / oder generatorseitig mit Gewindebolzen einstellbar fixiert. Diese Lösung hat den Nachteil, dass sowohl ein rotorseitiger als auch generatorseitiger Flansch am Getriebehohlrad der ersten Planetenstufe vorhanden sein muss, um die Fixierung zu ermöglichen. Alternativ, wenn nur der generatorseitige Flansch verfügbar wäre, müsste im Planetenträger eine Verankerungsmöglichkeit, z.B. Gewindebohrungen, eingebracht sein und damit eine gezielte Positionierung des Planetenträgers gegenüber den Gewindebohrungen im Anschlussflansch hergestellt werden. Erst dadurch ist eine Fixierung in allen Raumrichtungen möglich. Die DE 10 2019 214094 A1 beschreibt eine Variante mit eingesetzten Gleitstücken, die gegen den Planetenträger drücken und ihn in Position halten. In neueren Triebstrangkonzepten gibt es keinen rotorseitigen Gehäuseflansch. Dieser ist fester Bestandteil des Rotorlagergehäuses und steht für den Transport und während der Montage des Getriebes an die Hauptlagereinheit nicht zur Abstützung zur Verfügung. Es besteht folglich ein Bedürfnis für moderne Triebstrangkonzept eine Abstützung des Planetenträgers der ersten Planetenstufe für Transport- und Montagezwecke bereitzustellen.

Es ist die Aufgabe der Erfindung Maßnahmen aufzuzeigen, die ein Abstützen des Planetenträgers für Transport- und Montagezwecke ermöglichen.

Die Lösung der Aufgabe erfolgt durch ein Planetengetriebe mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Planetengetriebe für eine über einen Rotor angetriebene Windkraftanlage, mit zumindest einer in einem Getriebegehäuse um eine Drehachse A_{D} umlaufenden ersten und zweiten Planetenstufe, wobei die beiden Planetenstufen zwischen einem Sonnenrad der ersten Planetenstufe und einem Planetenträger der zweiten Planetenstufe antriebsmäßig verbunden sind, und ein das Sonnenrad der ersten Planetenstufe mit dem Planetenträger der ersten Planetenstufe verbindendes und bedarfsweise lösbares Abstützelement.

Das Planetengetriebe umfasst zumindest zwei oder es kann auch mehr Planetenstufen. Die jeweils letzte Planetenstufe kann mittelbar oder unmittelbar einen Generator antreiben. Bei einem mittelbaren Antrieb kann eine zwischengeschaltete Stirnradstufe vorgesehen sein. Der Planetenträger kann korbartig aufgeführt sein. Die Drehachse A_{D}, um die die zumindest eine Planetenstufe während eines Betriebes umläuft, legt vorliegend die Axialrichtung fest.

Planetenräder sind über Planetenachsen an dem jeweiligen Planetenträger gehalten. Die Planetenachsen laufen parallel und versetzt zu der Drehachse A_{D}. Die Planetenträger sind in eine radiale Richtung nach innen und eine radiale Richtung nach außen von dem Planetenträger bzw. den Seitenwangen freigestellt und stehen über eine jeweilige Verzahnung in einem Eingriff mit einem Hohlrad und einem Sonnenrad bzw. einer Sonnenradwelle.

Durch das Abstützelement, das das Sonnenrad der ersten Planetenstufe mit dem Planetenträger der ersten Planetenstufe verbindet, nutzt der Planetenträger der ersten Planetenstufe zur Abstützung und Zentrierung sein eigenes Sonnenrad. Bevorzugt ist das Abstützelement konzentrisch zu der Drehachse A_{D} angeordnet. Das Sonnenrad der ersten Planetenstufe ist biege- und drehfest mit dem Planetenträger der zweiten Stufe verbunden. Hierzu ist bevorzugt, dass der Planetenträger der zweiten Planetenstufe über eine Lagerung in dem Getriebegehäuse zentrisch gelagert ist. Hierüber ist die korrekte Ausrichtung des Planetenträgers gegenüber dem Hohlrad - jeweils der ersten Planetenstufe - gewährleistet. Der Begriff Sonnenrad bezieht sich auf die Funktionalität des Bauteils. In praktischer Ausgestaltung ist das Sonnenrad beispielsweise als Sonnenwelle ausgeführt, d.h. mit einer über einen reinen Verzahnungsabschnitt hinausgehenden axialen Erstreckung. Die Abstützung über das Abstützelement muss nicht im Schwerpunkt des vormontierten Planetenträgers erfolgen, sondern über das Abstützelement kann über weitere axial versetzte Abstützpunkte das restliche Kippmoment um den Schwerpunkt des Planetenträgers abgestützt werden.

Bei der beschriebenen Art der Ausgestaltung kann auf das Vorhandensein eines rotorseitigen Anschlussflansches zwischen Hohlrad und Rotorlagerung verzichtet werden. Es ist somit möglich, für moderne integrierte Triebstränge eine Fixierung und Zentrierung des Planetenträgers über ohnehin vorhandene, getriebeinterne Komponenten bereitzustellen. Ein weiterer Vorteil ist, dass das Abstützelement bei der Montage des Getriebes an die Hauptlagereinheit nicht störend im Weg ist. Das Abstützelement kann so lange an Ort und Stelle, d.h. montiert, bleiben, bis die Positionierung und Fixierung nicht mehr benötigt ist. Der Zugang, um das vorübergehend angebrachte Abstützelement zu entfernen, bleibt durch den Zugang durch die hohle Rotorwelle vorhanden. Dieser Zugang muss ohnehin genutzt werden, um die Verbindung zwischen Rotorwelle und Planetenträger der ersten Planetenstufe herzustellen. Auch vor einer nötigen Demontage, d.h. der Windkraftanlage auf dem Turm, kann über die hohle Rotorwelle das Abstützelement angebracht werden und der Planententräger am Getriebegehäuse abgestützt werden. Hierzu ist es nicht nötig, eine spezielle Stellung des Rotors gegenüber dem Planetengetriebe herzustellen. Zudem ermöglicht die beschriebene Anordnung den ersten Planetenträger auch ohne das Vorhandensein eines rotorseitigen Getriebegehäuseflansches fixieren zu können.

In einer bevorzugten Ausgestaltung ist das Abstützelement gegen eine Axialanlagefläche des Sonnenrades der ersten Planetenstufe gehalten. Hierdurch ist gewährleitet, dass das Abstützelement sicher an dem Sonnenrad abgeordnet werden kann. Insbesondere ist bevorzugt, dass eine Verschraubung vorgesehen ist, über die das Abstützelement gegenüber dem Sonnenrad gehalten ist. Diese Verschraubung kann beispielsweise eine einzelne Zentralschraube oder eine Mehrzahl an konzentrisch angeordneten Schrauben umfassen. In einer alternativen Ausführung kann das Abstützelement auch teilweise in das Sonnenrad eingesetzt sein und sich gegen eine Innenumfangsfläche des Sonnenrades abstützen.

Zudem ist eine Ausgestaltung bevorzugt, bei der das Abstützelement radial innerhalb eines Aufnahmevolumens des Planetenträgers der ersten Planetenstufe aufgenommen ist. Das Aufnahmevolumen kann topfförmig oder zylindrisch ausgeformt sein. In weiterhin bevorzugter Ausgestaltung ist vorgesehenen, dass das Abstützelement gegenüber einer Innenumfangsfläche des Aufnahmevolumens abgestützt ist.

In einer ersten möglichen Ausgestaltung kann vorgesehen sein, dass das Abstützelement gegenüber der Innenumfangsfläche über zumindest eine Verschraubung gehalten ist. Bevorzugt ist vorgesehen, dass über den Umfang mehrere Schraubelemente gleichmäßig beabstandet angeordnet sind. In einer alternativen Ausgestaltung kann vorgesehen sein, dass das Abstützelement gegenüber der Innenumfangsfläche über einen konischen Spannelementesatz gehalten ist.

In einer im Übrigen bevorzugten Ausgestaltung können zur Unterstützung des Abstützelement mehrere, bevorzugt mindestens drei, über einen Umfang des Getriebegehäuse verteilte und den Planetenträger der ersten Planetenstufe gegenüber dem Gehäuseelement abstützende Abstützdorne vorgesehen sind. Es können einfache mechanisch verstellbare Bolzen oder Schrauben gewindebasiert zum Einsatz kommen. Bevorzugt ist insbesondere, wenn die Abstützdorne elektrisch oder hydraulisch betriebene Zylinderelemente umfassen. Die am Getriebegehäuse angebrachten Abstützdorne finden ihren Gegenpart in einem generatorseitigen Flansch des Planetenträgers der ersten Planetenstufe.

Die Aufgabe wird zudem gelöst durch einen Antriebsstrang für eine Windkraftanlage zur drehmomentübertragenden Verbindung eines Rotors mit einem Generator, umfassend eine Hauptlagereinheit und einer Hauptwelle und ein über die Hauptwelle angetriebenes Getriebe, dadurch gekennzeichnet, dass das Getriebe als Planetengetriebe wie zuvor beschrieben ausgebildet ist.

Ferner wird die Aufgabe gelöst durch eine Windkraftanlage, umfassend eine Gondel, an der drehbar ein Mehrblattrotor und ein Generator angebracht sind, wobei der Mehrblattrotor drehmomentübertragend über einen Antriebsstrang mit dem Generator verbunden ist und der Antriebsstrang wie zuvor beschrieben ausgebildet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine nicht maßstabsgetreue Darstellung einer Windkraftanlage,
Fig. 2: einen Ausschnitt eines Zusammenbaus eines Planetengetriebes und einer Hauptlagereinheit mit einem Abstützelement,
Fig. 3a), 3b): alternative Ausgestaltung des Abstützelements und
Fig. 4: eine zusätzliche Möglichkeit zur Abstützung des Planetenträgers.

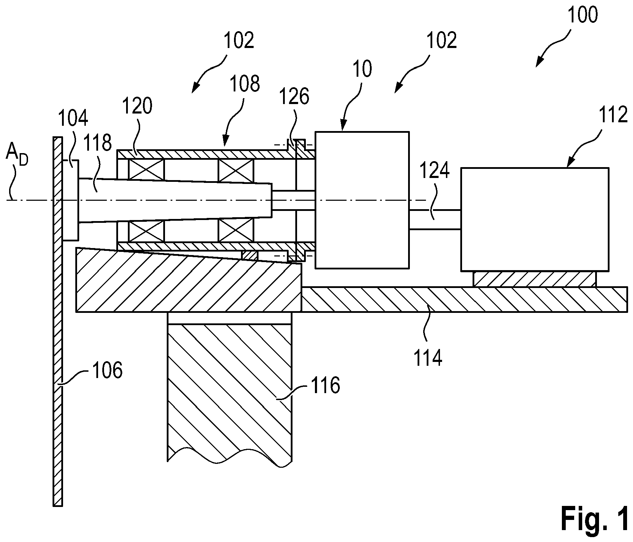

Die Figur 1 zeigt in schematischer und nicht maßstabsgetreuer Darstellung eine Windkraftanlage 100 in einer möglichen Ausführung. Wesentliches Element der Windkraftanlage 100 ist ein Antriebstrang 102, der vorliegend strukturell einen Rotorflansch 104 mit einem Rotor 106, eine Hauptlagereinheit 108, ein Getriebe 10 und einen Generator 112 umfasst. Über einen Maschinenträger 114 werden zumindest die Hauptlagereinheit 108 und der Generator 112 über einen Turm 116 gegenüber einem nicht dargestellten Boden abgestützt. Die Hauptlagereinheit 108 umfasst eine Hauptwelle 118, die über eine angestellte Kegelrollenlagerung gegenüber einem Lagergehäuse 120 der Hauptlagereinheit 108 drehbar um eine Drehachse A_{D} gelagert ist. An einem Ende der Hauptwelle 118 ist der Rotorflansch 104 und an diesem der Rotor 106 gehalten. Das andere Ende der Hauptwelle 118 ist vorliegend starr mit dem Getriebe 10 antriebsmäßig verbunden, um ein von dem Rotor 106 aufgebrachtes Antriebsmoment in das Getriebe 10 einzuleiten. Das Getriebe 10 ist als Planetengetriebe mit einer oder mehreren Planetenstufen ausgeführt. Das Getriebe 10 ist über eine Generatorwelle 124 antriebsmäßig mit dem Generator 112 verbunden. Über einen Flansch 126 ist das Lagergehäuse 120 mit dem Getriebe 10 verbunden. Ein Reaktionsmoment des Getriebes 10 ist über den Flansch 126 gegenüber dem Maschinenträger 114 abgestützt.

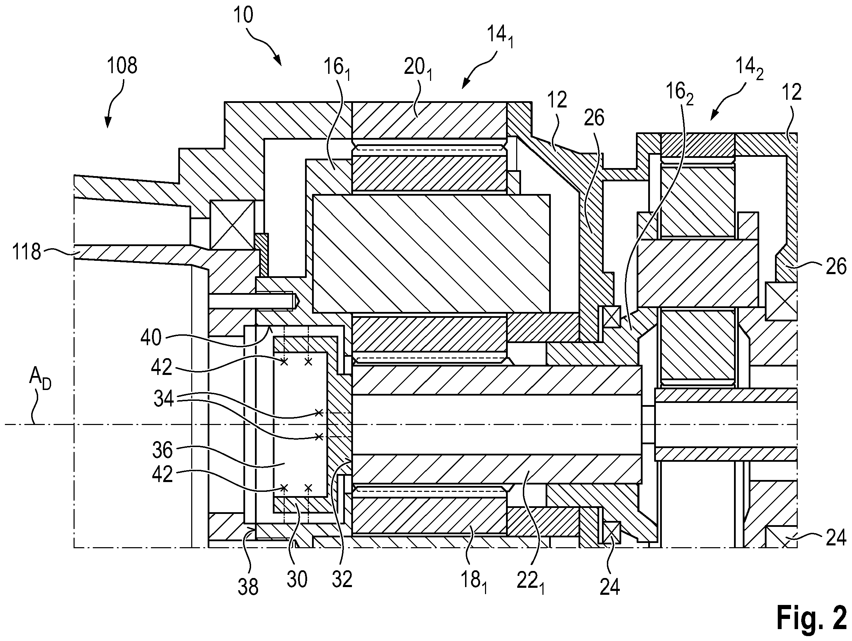

Die Figur 2 zeigt einen Ausschnitt eines Zusammenbaus eines als Planetengetriebe ausgeführten Getriebes 10 und der Hauptlagereinheit 108, wie er beispielsweise in einer in Figur 1 dargestellten Windkraftanlage 100 verbaut sein kann. Gezeigt sind zwei hintereinander angeordnete Planetenstufen 14₁ und 14₂, die um eine Drehachse A_{D} umlaufend in einem Getriebegehäuse 12 angeordnet sind. Es kann auch eine dritte, aber nicht dargestellte Planetenstufe vorgesehen sein. Die Planetenstufen 14₁ und 14₂ sind abgesehen von ihrer Dimensionierung entsprechend aufgebaut und weisen jeweils einen Planetenträger 16₁, 16₂, ein Hohlrad 20₁, 20₂, ein Sonnenrad 22₁, 22₂ und mehrere mit dem jeweiligen Planetenträger 16₁, 16₂ umlaufend und wechselseitig mit dem Hohlrad 20₁, 20₂ und dem Sonnenrad 22₁, 22₂ Verzahnungseingriff stehende Planetenräder 18₁, 18₂ auf. Der Planetenträger 16₂ der zweiten Planetenstufe 14₂ ist über Lager 24 an gehäuseseitigen Abstützflanschen 26 beidseitig oder einseitig gelagert. Über die Lager 24 ist der zweite Planetenträger weitestgehend zentrisch in dem Getriebegehäuse 12 des Planetengetriebes 10 gehalten. Die Sonne 22₁ der ersten Planetenstufe 14₁ ist drehfest und biegesteif mit dem Planetenträger 16₂ der zweiten Planetenstufe 14₂ verbunden. Der Planetenträger 16₁ der ersten Planetenstufe 14₁ ist nicht eigens in dem Gehäuse 12 gelagert, sondern wird nach Montage über eine drehfeste Verbindung mit der Hauptwelle 118 mittelbar über die Hauptlagereinheit 108 gelagert.

In dem in Figur 2 gezeigten Zusammenbauzustand erfährt wie beschrieben der Planetenträger 16₁ der ersten Planetenstufe 14₁ eine Lagerung mittelbar über die Hauptlagereinheit 108 und der Planetenträger 16₂ der zweiten Planetenstufe 14₂ eine Lagerung in dem Getriebegehäuse 12 über die Lager 24. Das Sonnenrad 22₁ der ersten Planetenstufe 14₁ erhält seine Positionierung mittelbar über den zweiten Planetenträger 16₂ durch die Lager 24. Folglich nimmt der Planetenträger 16₁ der ersten Planetenstufe 14₁ in einem Zustand, in der die Hauptlagereinheit 108 und das Planetengetriebe 10 nicht miteinander verbunden sind, eine ungelagerte bzw. undefinierte Stellung ein. Der erste Planetenträger 16₁ lastet dann infolge der Massekräfte undefiniert auf den Verzahnungen der Verzahnungselemente.

Für eine solche nicht zusammengebaute Stellung ist vorliegend ein Abstützelement 30 vorgesehen. Das Abstützelement 30 kann als Einsatz in den ersten Planetenträger 16₁ ausgeführt sein. Das Abstützelement 30 verbindet das Sonnenrad 22₁ der ersten Planetenstufe 14₁ mit dem Planetenträger 16₁ der ersten Planetenstufe 14₁. Das Abstützelement 30 ist bedarfsweise lösbar und einstellbar ausgeführt und zwar zumindest von dem Sonnenrad 22₁ oder zumindest von dem Planetenträger 16₁, jeweils der ersten Planetenstufe 14₁. Bevorzugt ist, wenn das Abstützelement 30 bedarfsweise lösbar sowohl von dem Sonnenrad 22₁ als auch von dem Planetenträger 16₁, jeweils der ersten Planetenstufe 14₁, ausgeführt ist. Dies bietet die Möglichkeit, dass das Abstützelement 30 nach einem Zusammenbau von Planentengetriebe 12 und Hauptlagereinheit 108 entfernt werden kann und zwar durch die hohle Hauptwelle 118. Das Abstützelement 30 positioniert den Planetenträger 16₁ konzentrisch zu der Drehachse A_{D}.

Das Abstützelement 30 ist gegen eine Axialanlagefläche 32 des Sonnenrades 22₁ der ersten Planetenstufe 14₁ gehalten und ist beispielsweise gegenüber dem Sonnenrad 22₁ über zumindest eine Verschraubung 34 gehalten, was in Figur 2 lediglich skizziert ist. Das Abstützelement 30 ist radial innerhalb eines Aufnahmevolumens 36 des Planetenträgers 16₁ der ersten Planetenstufe 14₁ aufgenommen. Bevorzugt ist das Abstützelement 30 vollständig in dem Aufnahmevolumen 36 versenkt, so dass das Abstützelement 30 einerseits zumindest bündig mit einer axialen Stirnfläche 38 des ersten Planetenträgers 16₁ oder - wie dargestellt - nach innen versetzt bezogen auf die Stirnfläche 38 einsitzt. Bezüglich des ersten Planetenträgers 16₁ ist das Abstützelement 30 gegenüber einer Innenumfangsfläche 40 des Aufnahmevolumens 36 abgestützt. In der in Figur 2 gezeigten Varianten des Abstützelements 30 ist dieses gegenüber der Innenumfangsfläche 40 über zumindest eine Verschraubung 42 gehalten. Bevorzugt ist, dass über den Umfang mehrere Verschraubungen 42 verteilt sind. Wie in Figur 2 dargestellt, können zusätzlich mehrere Verschraubungen 42 in einem axialen Abstand zueinander vorgesehen sein.

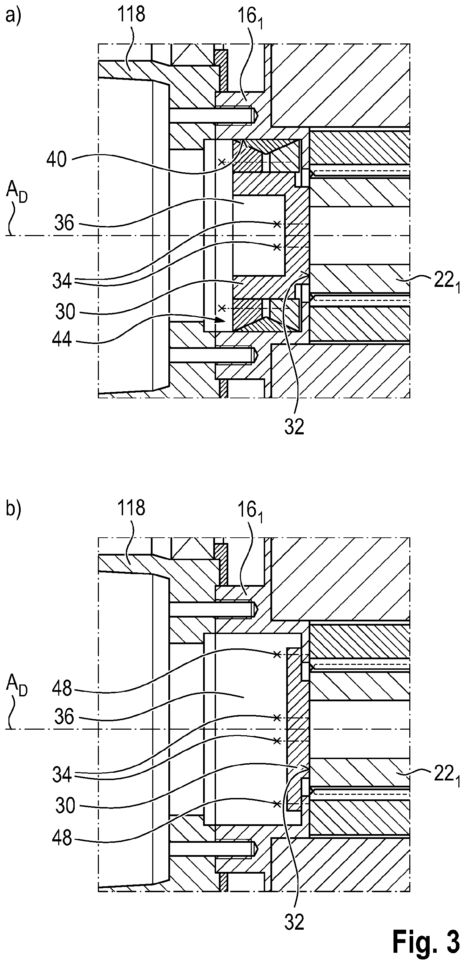

In den Figuren 3a) und 3b) sind jeweils eine alternative Ausgestaltung des Abstützelements 30 und seinem Sitz in dem Aufnahmevolumen 36 des ersten Planetenträgers 16₁ gezeigt. Bei der in Figur 3a) gezeigten Variante ist das Abstützelement 30 gegenüber der Innenumfangsfläche 40 des ersten Planetenträgers 16₁ über einen konischen Spannelementesatz 44 gehalten. Bei der in Figur 3b) gezeigten Variante ist das Abstützelement 30 wie bereits beschrieben gegen die Axialanlagefläche 32 des Sonnenrades 22₁ der ersten Planetenstufe 14₁ gehalten und auf seiten des Planententrägers 16₁ gegen eine Axialanlagefläche 46 innerhalb des Aufnahmevolumens 36. Gegen diese Axialanlagefläche 46 ist das Abstützelement 30 mit einer oder mehreren Verschraubungen 48 gehalten.

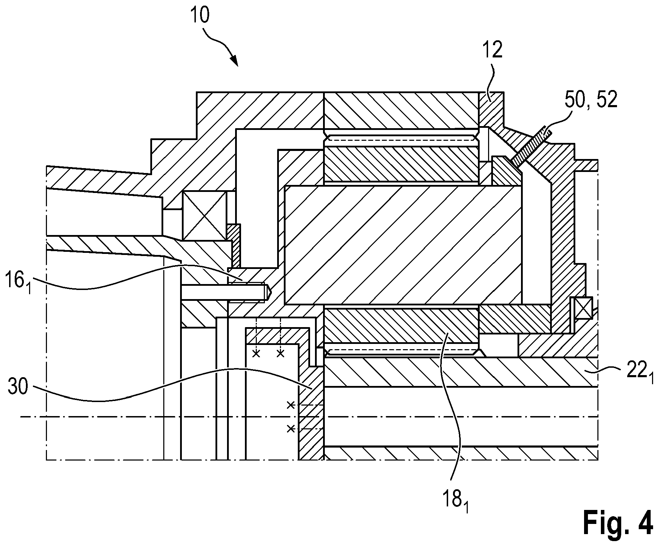

Die Figur 4 zeigt eine zusätzliche Möglichkeit der Abstützung des ersten Planetenträgers 16₁ gegenüber dem Getriebegehäuse 12. Für diese zusätzliche Möglichkeit der Abstützung sind mehrere, bevorzugt mindestens drei, über einen Umfang des Getriebegehäuses 12 verteilte und den Planetenträger 16₁ der ersten Planetenstufe 14₁ gegenüber dem Getriebegehäuse 12 abstützende Abstützdorne 50 vorgesehen. Die Abstützdorne 50 können elektrisch oder hydraulisch betriebene Zylinderelemente 52 umfassen.

### Bezugszeichenliste

- 10: Planetengetriebe
- 12: Getriebegehäuse
- 14: Planetenstufe
- 16: Planetenträger
- 18: Planetenräder
- 20: Hohlrad
- 22: Sonnenrad
- 24: Lager
- 26: Abstützflansch
- 30: Abstützelement
- 32: Axialanlagefläche
- 34: Verschraubung
- 36: Aufnahmevolumen
- 38: Stirnfläche
- 40: Innenumfangsfläche
- 42: Verschraubung
- 44: Spannelementesatz
- 46: Axialanlagefläche
- 48: Verschraubung
- 50: Abstützdorn
- 52: Zylinderelement
- 100: Windkraftanlage
- 102: Antriebstrang
- 104: Rotorflansch
- 106: Mehrblattrotor
- 108: Hauptlagereinheit
- 112: Generator
- 114: Maschinenträger
- 116: Turm
- 118: Hauptwelle
- 120: Lagergehäuse
- 124: Generatorwelle
- 126: Flansch

## Patentansprüche

1. Planetengetriebe (10) für eine über einen Rotor (72) angetriebene Windkraftanlage (70), mit
zumindest einer in einem Getriebegehäuse (12) um eine Drehachse A_{D} umlaufenden ersten und zweiten Planetenstufe (14₁, 14₂), wobei die beiden Planetenstufen (14₁, 14₂) zwischen einem Sonnenrad (22₁) der ersten Planetenstufe (14₁) und einem Planetenträger (16₂) der zweiten Planetenstufe (14₂) antriebsmäßig verbunden sind, und
ein das Sonnenrad (22₁) der ersten Planetenstufe (14₁) mit dem Planetenträger (16₁) der ersten Planetenstufe (14₁) verbindendes und bedarfsweise lösbares Abstützelement (30).

2. Planetengetriebe (10) nach Anspruch 1, **dadurch gekennzeichnet, dass** der Planetenträger (16₂) der zweiten Planetenstufe (14₂) über eine Lagerung (24) in dem Getriebegehäuse (12) weitestgehend zentrisch gelagert ist.

3. Planetengetriebe (10) nach Anspruch 1 oder 2, **dadurch gekennzeichnet, dass** das Abstützelement (30) konzentrisch zu der Drehachse A_{D} angeordnet ist.

4. Planetengetriebe (10) nach einem der Ansprüche 1 bis 3, **dadurch gekennzeichnet, dass** das Abstützelement (30) gegen eine Axialanlagefläche (32) und/oder eine Radialanlagefläche des Sonnenrades (22₁) der ersten Planetenstufe (14₁) gehalten ist.

5. Planetengetriebe (10) nach Anspruch 4, **dadurch gekennzeichnet, dass** das Abstützelement (30) gegenüber dem Sonnenrad (22₁) über zumindest eine Verschraubung (34) gehalten ist.

6. Planetengetriebe (10) nach einem der Ansprüche 1 bis 5, **dadurch gekennzeichnet, dass** das Abstützelement (30) radial innerhalb eines Aufnahmevolumens (36) des Planetenträgers (16₁) der ersten Planetenstufe (14₁) aufgenommen ist.

7. Planetengetriebe (10) nach Anspruch 6, **dadurch gekennzeichnet, dass** das Abstützelement (30) gegenüber einer Innenumfangsfläche (40) des Aufnahmevolumens (36) abgestützt ist.

8. Planetengetriebe (10) nach Anspruch 7, **dadurch gekennzeichnet, dass** das Abstützelement (30) gegenüber der Innenumfangsfläche (40) über zumindest eine Verschraubung (42) gehalten ist.

9. Planetengetriebe (10) nach Anspruch 7, **dadurch gekennzeichnet, dass** das Abstützelement (30) gegenüber der Innenumfangsfläche (40) über einen konischen Spannelementesatz (44) gehalten ist.

10. Planetengetriebe (10) nach einem der Ansprüche 1 bis 9, **dadurch gekennzeichnet, dass** mehrere, bevorzugt mindestens drei, über einen Umfang des Getriebegehäuses (12) verteilte und den Planetenträger (16₁) der ersten Planetenstufe (14₁) gegenüber dem Getriebegehäuse (12) abstützende Abstützdorne (50) vorgesehen sind.

11. Planetengetriebe (10) nach Anspruch 10, **dadurch gekennzeichnet, dass** die Abstützdorne (50) elektrisch oder hydraulisch betriebene Zylinderelemente (52) umfassen.

12. Antriebsstrang (102) für eine Windkraftanlage (100) zur drehmomentübertragenden Verbindung eines Rotors (106) mit einem Generator (112), umfassend eine Hauptlagereinheit (108) und einer Hauptwelle (118) und ein über die Hauptwelle (118) angetriebenes Getriebe (10), **dadurch gekennzeichnet, dass** das Getriebe (10) als Planetengetriebe nach einem der vorangegangenen Ansprüche ausgebildet ist.

13. Windkraftanlage (100), umfassend einen Rotorflansch (104) mit einem Rotor (106) und einen Generator (112), wobei ein an einem Maschinenträger (114) gehaltener und den Rotorflansch (104) mit dem Generator (112) verbindender Antriebsstrang (102) vorgesehen ist, **dadurch gekennzeichnet, dass** der Antriebsstrang (102) nach Anspruch 12 ausgebildet ist.
